# EUROPÄISCHE PATENTSCHRIFT

(11) **EP 4 155 513 B1**
(45) Veröffentlichungstag und Bekanntmachung des Hinweises auf die Patenterteilung: **03.04.2024**
(21) Anmeldenummer: 22192048.1
(22) Anmeldetag: 25.08.2022
(51) Int. Cl.: F01N 3/20, F01N 3/30, F01N 13/14

(54) **ABGASFÜHRUNGSGEHÄUSE**
EXHAUST GAS GUIDE HOUSING
BOÎTIER DE GUIDAGE DES GAZ D'ÉCHAPPEMENT

(30) Priorität: 28.09.2021 DE 102021125013
(43) Veröffentlichungstag der Anmeldung: 29.03.2023
(73) Patentinhaber: Purem GmbH, 66539 Neunkirchen (DE)
(72) Erfinder: Buckermann, Christoph, Einbeck (DE); Marek, Marc-André, Böbingen an der Rems (DE)
(74) Vertreter: Ruttensperger Lachnit Trossin Gomoll

(56) Entgegenhaltungen:
- FR-A- 1 279 334
- FR-A1- 2 922 943
- US-A- 3 817 714
- US-A- 4 511 536

## Beschreibung

Die vorliegende Erfindung betrifft ein Abgasführungsgehäuse für eine Abgasanlage einer Brennkraftmaschine.

Zur Verringerung der von Brennkraftmaschinen zur Umgebung ausgestoßenen Schadstoffe ist es bekannt, in einer Abgasanlage verschiedene Abgasbehandlungseinheiten, wie zum Beispiel Katalysatoren oder Partikelfilter, vorzusehen. Derartige Abgasbehandlungseinheiten benötigen für einen effizienten Betrieb eine ausreichend hohe Betriebstemperatur, welche insbesondere am Beginn des Arbeitsbetriebs einer Brennkraftmaschine noch nicht vorliegt. Um derartige Abgasbehandlungseinheiten schneller auf Betriebstemperatur zu bringen, ist es bekannt, stromaufwärts davon im Allgemeinen elektrisch betriebene Abgasheizanordnungen vorzusehen, welche auf das am Beginn des Arbeitsbetriebs einer Brennkraftmaschine noch eine vergleichsweise niedrige Temperatur aufweisende Abgas Wärme übertragen. Das Abgas transportiert diese Wärme zu den in der Abgasströmungsrichtung dann folgenden Abgasbehandlungseinheiten, so dass diese schneller auf ihre Betriebstemperatur gebracht werden und damit die Zeitdauer, in welcher keine effiziente Abgasreinigung stattfinden kann, verkürzt wird.

Um diese Zeitdauer noch weiter zu verkürzen, kann bereits vor dem Beginn des Arbeitsbetriebs einer Brennkraftmaschine bzw. einhergehend mit dem Beginn des Arbeitsbetriebs einer Brennkraftmaschine bei einer vergleichsweise geringen Menge des aus der Brennkraftmaschine ausgestoßenen Abgases Luft stromaufwärts bezüglich einer Abgasheizanordnung in eine Abgasanlage eingeleitet werden. Diese Luft kann in einer Abgasheizanordnung Wärme aufnehmen und diese bei noch nicht vorhandenem oder nur schwach ausgeprägtem Abgasstrom auf eine stromabwärts folgende Abgasbehandlungseinheit übertragen.

Ein Abgasführungsgehäuse gemäß dem Oberbegriff des Anspruchs 1 ist aus der FR 1 279 334 A bekannt.

Es ist die Aufgabe der vorliegenden Erfindung, ein Abgasführungsgehäuse für eine Abgasanlage einer Brennkraftmaschine vorzusehen, mit welchem eine effiziente Erwärmung von in eine Abgasanlage eingeleiteter Luft gewährleistet werden kann.

Erfindungsgemäß wird diese Aufgabe gelöst durch ein Abgasführungsgehäuse für eine Abgasanlage einer Brennkraftmaschine gemäß Anspruch 1. Dieses Abgasführungsgehäuse umfasst einen von Abgas in einer Abgas-Hauptströmungsrichtung durchströmbaren Lufteintritt-Gehäuseteil mit einer eine Gehäuselängsachse umgebenden Gehäusewandung, wobei in wenigstens einem Lufteintritt-Umfangsbereich der Gehäusewandung wenigstens eine Lufteintrittsöffnung vorgesehen ist, wobei an einer Innenseite des Lufteintritt-Gehäuseteils eine zusammen mit der Gehäusewandung eine Lufteintrittskammer umgrenzende Innenwandung vorgesehen ist und die wenigstens eine Lufteintrittsöffnung zu der Lufteintrittskammer offen ist, wobei in der Innenwandung wenigstens eine Luftdurchtrittsöffnung vorgesehen ist oder/und zwischen der Innenwandung und der Gehäusewandung wenigstens eine Luftdurchtrittsöffnung gebildet ist.

Durch das Bereitstellen einer derartigen Lufteintrittskammer und das Vorsehen einer oder mehrerer Luftdurchtrittsöffnungen, über welche in die Lufteintrittskammer eingeleitete Luft in das Innenvolumen des Abgasführungsgehäuses gelangt, wird es möglich, einen definierten Einfluss auf den Ort und die Verteilung der Einleitung derartiger Luft zu nehmen. Insbesondere ist damit die Möglichkeit gegeben, derartige Luft so in das Abgasführungsgehäuse einzuleiten, dass diese eine stromabwärts folgende Abgasheizanordnung im Wesentlichen gleichmäßig anströmt. Damit wird einerseits eine lokale Überhitzung einer derartigen Abgasheizanordnung dort, wo diese möglicherweise nicht ausreichend von dem Luftstrom erreicht wird, vermieden. Andererseits wird gewährleistet, dass aus im Wesentlichen allen Bereichen, in welchen in einer derartigen Abgasheizanordnung Wärme generiert wird, Wärme abgetragen werden kann, um weiter stromabwärts folgende Systembereiche, wie zum Beispiel eine oder mehrere Abgasbehandlungseinheiten, zu erwärmen.

Für eine möglichst gleichmäßige Verteilung des Stroms der eingeleiteten Luft in dem Abgasführungsgehäuse ist in der Innenwandung eine Mehrzahl von in Umfangsrichtung um die Gehäuselängsachse aufeinanderfolgenden Luftdurchtrittsöffnungen vorgesehen.

Die gleichmäßige Verteilung der Luft wird dadurch unterstützt, dass eine Öffnungsgröße der Luftdurchtrittsöffnungen in Umfangsrichtung ausgehend von dem wenigstens einen Lufteintritt-Umfangsbereich zunimmt.

Für eine stabile Positionierung der Innenwandung in dem Abgasführungsgehäuse kann die Innenwandung wenigstens in einem stromaufwärtigen axialen Endbereich bezüglich der Gehäusewandung, also direkt an der Gehäusewandung oder über eine weitere Komponente des Lufteintritt-Gehäuseteils, an dieser festgelegt sein. Weiter kann die Innenwandung wenigstens in einem stromabwärtigen axialen Endbereich unter radialer Vorspannung an einer Innenseite der Gehäusewandung abgestützt sein.

Eine insbesondere gegen die thermischen und chemischen Einflüsse des Abgasstroms resistente Anbindung der Innenwandung kann dadurch erreicht werden, dass die Innenwandung in ihrem stromaufwärtigen axialen Endbereich bezüglich der Gehäusewandung durch Materialschluss, vorzugsweise Verschweißen, festgelegt ist.

Die gleichmäßige Verteilung des Luftstroms im Innenvolumen des Abgasführungsgehäuses kann weiter dadurch unterstützt werden, dass wenigstens zwischen einem stromabwärtigen axialen Endbereich der Innenwandung und der Gehäusewandung wenigstens eine Luftdurchtrittsöffnung gebildet ist.

Dabei kann beispielsweise vorgesehen sein, dass die wenigstens eine zwischen dem stromabwärtigen Endbereich der Innenwandung und der Gehäusewandung gebildete Luftdurchtrittsöffnung sich in Umfangsrichtung wenigstens entlang eines Teils des stromabwärtigen Endbereichs der Innenwandung erstreckt.

Um einen direkten Hindurchtritt von Luft durch die Lufteintrittskammer ohne weitergehende Verteilung der eingeleiteten Luft über den Umfang zu vermeiden, wird vorgeschlagen, dass in einem die wenigstens eine Lufteintrittsöffnung überdeckenden Bereich der Innenwandung keine Luftdurchtrittsöffnung ausgebildet ist.

Zur Bereitstellung von Information über den von einer Brennkraftmaschine ausgestoßenen Abgasstrom kann in dem Lufteintritt-Gehäuseteil wenigstens eine nicht von der Innenwandung überdeckte Sensoröffnung vorgesehen sein. Da eine derartige Sensoröffnung nicht von der Innenwandung überdeckt ist, kann ein in dieser angeordneter Sensor unmittelbar in Wechselwirkung mit dem das Abgasführungsgehäuse durchströmenden Abgasstrom treten und somit Information z.B. über dessen Temperatur oder dessen chemische Zusammensetzung liefern.

Der Lufteintritt-Gehäuseteil kann ein in der Abgas-Hauptströmungsrichtung sich radial erweiterndes Lufteintritt-Gehäuseelement umfassen, wobei das Lufteintritt-Gehäuseelement in einem stromaufwärtigen Endbereich eine Abgaseintrittsöffnung aufweist und zur Anbindung an eine Abgasführungskomponente einer Abgasanlage ausgebildet ist und in einem stromabwärtigen Endbereich mit einer vorzugsweise im Wesentlichen zylindrischen Gehäuseumfangswandung verbunden ist.

Die Erfindung betrifft ferner Abgasanlage für eine Brennkraftmaschine, umfassend ein erfindungsgemäß aufgebautes Abgasführungsgehäuse.

Zur Übertragung von Wärme auf die in die Abgasanlage eingeleitete Luft können in dem Abgasführungsgehäuse stromabwärts bezüglich des Lufteintritt-Gehäuseteils eine Abgasheizanordnung und stromabwärts bezüglich der Abgasheizanordnung wenigstens eine Abgasbehandlungseinheit, vorzugsweise Katalysator oder/und Partikelfilter, angeordnet sein.

Die vorliegende Erfindung wird nachfolgend mit Bezug auf die beiliegenden Figuren detailliert beschrieben. Es zeigt:
- Fig. 1: eine Prinzipdarstellung einer Abgasanlage mit einem Abgasbehandlungsgehäuse;
- Fig.2: ein Lufteintritt-Gehäuseelement des Abgasbehandlungsgehäuses der Fig. 1 betrachtet von stromaufwärts;
- Fig. 3: eine Seitenansicht des Lufteintritt-Gehäuseelements der Fig. 2;
- Fig. 4: das Lufteintritt-Gehäuseelement der Fig. 2 betrachtet von stromabwärts;

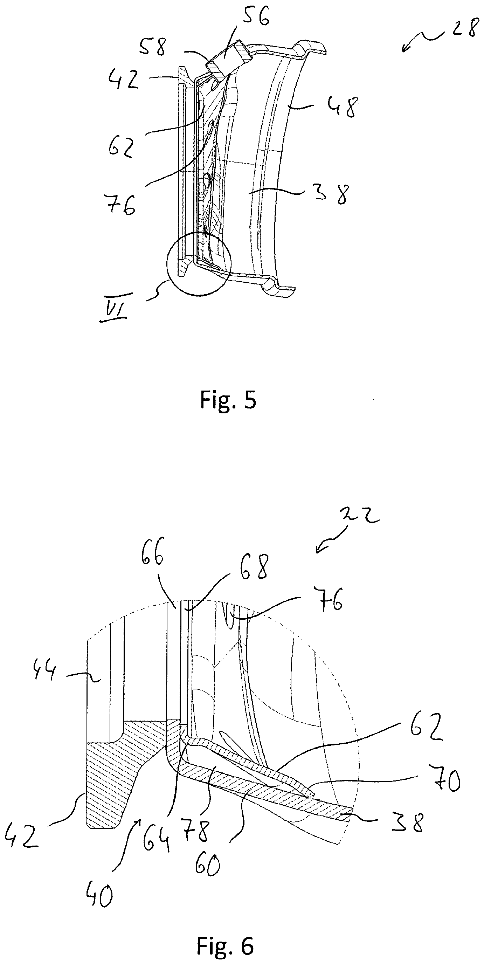

- Fig. 5: eine Längsschnittansicht des Lufteintritt-Gehäuseelements der Fig. 2, geschnitten längs einer Linie V-V in Fig. 2;
- Fig. 6: das Detail VI in Fig. 5 vergrößert;
- Fig. 7: eine der Fig. 6 entsprechende Detaildarstellung einer alternativen Ausgestaltungsform eines Lufteintritt-Gehäuseelements.

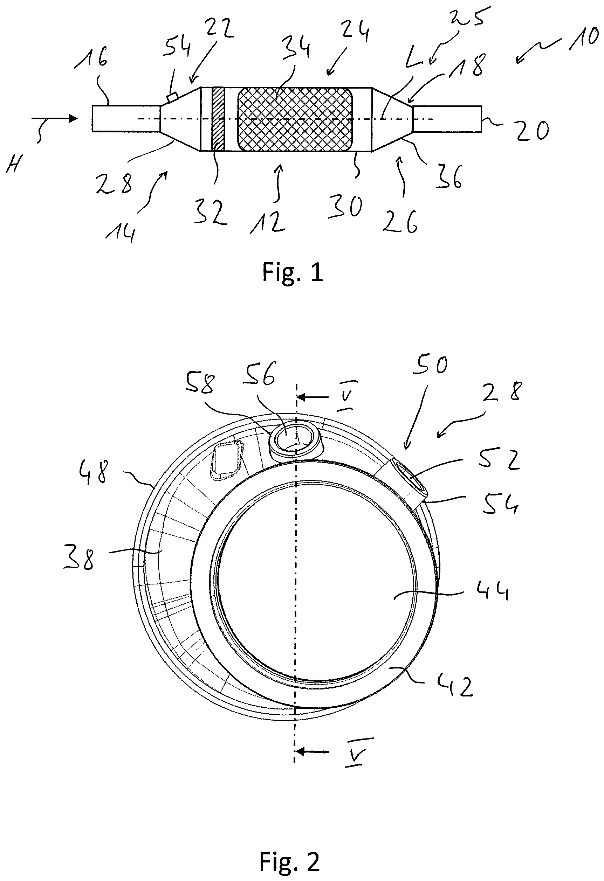

In Fig. 1 ist eine Abgasanlage für eine Brennkraftmaschine beispielsweise in einem Kraftfahrzeug allgemein mit 10 bezeichnet. Die Abgasanlage 10 umfasst ein Abgasführungsgehäuse 12, das in einem stromaufwärtigen Endbereich 14 an eine beispielsweise rohrartig oder als Turbolader ausgebildete Abgasführungskomponente 16 angebunden ist und in einem stromabwärtigen Endbereich 18 an eine weitere beispielsweise rohrartig ausgebildete Abgasführungskomponente 20 angebunden ist. Die Abgasanlage 10 bzw. das Abgasführungsgehäuse 12 wird von dem von einer Brennkraftmaschine ausgestoßenen Abgas in einer Abgas-Hauptströmungsrichtung H durchströmt. Es ist darauf hinzuweisen, dass in der Abgasanlage 10 bzw. dem Abgasführungsgehäuse 12 lokal von der Abgas-Hauptströmungsrichtung H abweichende oder dieser überlagerte Strömungsrichtungen des Abgases auftreten können. Die in der Fig. 1 erkennbare Abgas-Hauptströmungsrichtung H dient primär dazu, die stromaufwärtige bzw. stromabwärtige Orientierung oder Positionierung von Komponenten oder Bereiche der Abgasanlage 10 zu definieren.

Das Abgasführungsgehäuse 12 umfasst einen in dem stromaufwärtigen Endbereich 14 desselben angeordneten Lufteintritt-Gehäuseteil 22, einen auf den Lufteintritt-Gehäuseteil 22 folgenden Abgasbehandlung-Gehäuseteil 24 und einen in einem stromabwärtigen Endbereich 25 positionierten und in der Abgas-Hauptströmungsrichtung H auf den Abgasbehandlung-Gehäuseteil 24 folgenden Luftaustritt-Gehäuseteil 26, an welchen die Abgasführungskomponente 20 anschließt.

Der Lufteintritt-Gehäuseteil 22 kann im Wesentlichen bereitgestellt sein durch ein Lufteintritt-Gehäuseelement 28, welches eine Gehäuselängsachse L des Abgasführungsgehäuses 12 umgibt und in der Abgas-Hauptströmungsrichtung H sich bezüglich der Gehäuselängsachse L radial erweiternd ausgebildet ist. Der Abgasbehandlung-Gehäuseteil 24 kann eine beispielsweise im Wesentlichen zylindrisch gestaltete und in Richtung der Gehäuselängsachse L langestreckte Gehäuseumfangswandung 30 umfassen. In dem von der Gehäuseumfangswandung 30 umgrenztem Volumenbereich können in der Abgas-Hauptströmungsrichtung H aufeinander folgend eine beispielsweise elektrisch erregbare Abgasheizanordnung 32 und eine oder mehrere Abgasbehandlungseinheiten 34, wie z. B. Katalysator, Partikelfilter oder dergleichen, angeordnet sein. Der Abgasaustritt-Gehäuseteil 26 kann ein Abgasaustritt-Gehäuseelement 36 umfassen, welches hinsichtlich seiner Formgebung im Wesentlichen dem Abgaseintritt-Gehäuseelement 28 entsprechen kann und in Richtung der Abgas-Hauptströmungsrichtung H bzw. der Gehäuselängsachse L sich verjüngend ausgebildet sein kann.

Das im Wesentlichen den Lufteintritt-Gehäuseteil 22 bereitstellende Lufteintritt-Gehäuseelement 28 wird nachfolgend mit Bezug auf die Fig. 2 bis 4 detaillierter beschrieben.

Das Lufteintritt-Gehäuseelement 28 umfasst ein beispielsweise als Blechumformteil bereitgestelltes Wandungsteil 38, welches die vorangehend angesprochene in Richtung der Gehäuselängsachse L bzw. auch in der Abgas-Hauptströmungsrichtung H sich radial erweiternde, näherungsweise konische Struktur aufweist. In einem stromaufwärtigen Endbereich 40 des Lufteintritt-Gehäuseelements 28 ist das Wandungsteil 38 mit einem beispielsweise flanschartig ausgebildeten Verbindungsteil 42 beispielsweise durch Materialschluss, vorzugsweise eine in Umfangsrichtung um die Gehäuselängsachse L vollständig umlaufende Schweißnaht, fest verbunden. Mit dem Verbindungsteil 42 kann das Lufteintritt-Gehäuseelement 28 an die Abgasführungskomponente 16 angebunden werden. Im stromaufwärtigen Endbereich 40 des Lufteintritt-Gehäuseelements 28 stellt dieses eine Abgaseintrittsöffnung 44 bereit, über welche das in der Abgas-Hauptströmungsrichtung H aus der Abgasführungskomponente 16 heranströmende Abgas in das Abgasführungsgehäuse 12 bzw. den Lufteintritt-Gehäuseteil 22 desselben eintritt. In einem stromabwärtigen Endbereich 46 des Lufteintritt-Gehäuseelements 28 weist das Wandungsteil 38 einen beispielsweise im Wesentlichen zylindrisch geformten Verbindungsabschnitt 48 auf, welcher beispielsweise einen axialen Endbereich der Gehäuseumfangswandung 30 radial außen übergreifend positioniert werden kann und durch eine vorzugsweise in Umfangsrichtung vollständig umlaufende Schweißnaht damit fest und gasdicht verbunden werden kann.

An dem Lufteintritt-Gehäuseteil 22 des Abgasführungsgehäuses 12 ist in einem Lufteintritt-Umfangsbereich 50 eine Lufteintrittsöffnung 52 vorgesehen. Diese kann beispielsweise im Bereich eines an das Wandungsteil 38 angebundenen Lufteintrittsstutzens 54 ausgebildet sein. An den Lufteintrittsstutzen 54 kann eine beispielsweise zu einem Luftgebläse führende Luftleitung angeschlossen werden. In Umfangsabstand zu dem Lufteintrittsstutzen 54 bzw. der Lufteintrittsöffnung 52 ist an dem Lufteintritt-Gehäuseelement 28 eine Sensoröffnung 56 beispielsweise in einem am das Wandungsteil 38 angebundenen Sensorstutzen 58 vorgesehen. An dem Sensorstutzen 58 kann ein Sensor vorgesehen werden, welcher in Wechselwirkung mit dem in den Lufteintritt-Gehäuseteil 22 eintretende Abgas kommen kann und somit Information beispielsweise über dessen Temperatur oder/und dessen Zusammensetzung liefern kann.

An dem Lufteintritt-Gehäuseelement 28 ist an einer Innenseite des eine Gehäusewandung 60 des Lufteintritt-Gehäuseteils 22 bereitstellenden Wandungsteils 38 eine Innenwandung 62 angeordnet. Die Innenwandung 62 weist, angepasst an die sich in der Abgas-Hauptströmungsrichtung H radial erweiternde Struktur des Wandungsteils 38, eine sich ebenfalls radial erweiternde, näherungsweise konusartige Form auf. Die Innenwandung 62 ist, ebenso wie das Wandungsteil 38, vorzugsweise als Blechumformteil ausgebildet.

In einem stromaufwärtigen axialen Endbereich 64 der Innenwandung 62 ist diese mit dem Wandungsteil 38 durch Materialschluss, vorzugsweise Verschweißung, fest verbunden. Hierzu kann die Innenwandung 62, angepasst an die Formgebung des Wandungsteils 38 mit einem nach radial innen greifenden Flanschbereich 66, einen nach radial innen greifenden Flanschbereich 68 aufweisen, der in Umfangsrichtung verteilt durch mehrere Verbindungspunkte oder eine umlaufende Schweißnaht fest mit dem nach radial innen greifenden Flanschbereich 66 des Wandungsteils 38 verbunden sein kann.

In einem stromabwärtigen axialen Endbereich 70 der Innenwandung 62 liegt diese vorzugsweise unter radialer Vorspannung zumindest in einigen Umfangsbereichen an der Innenoberfläche des Wandungsteils 38 an. Auf diese Art und Weise können im Betrieb einer Brennkraftmaschine und bei den dabei hervorgerufenen Vibrationen Anschlaggeräusche zwischen der Innenwandung 62 und dem Wandungsteil 38 vermieden werden. Alternativ oder zusätzlich zu dieser radialen Vorspannung kann auch im stromabwärtigen axialen Endbereich 70 die Innenwandung 62 zumindest an einigen Umfangsbereichen durch Materialschluss, vorzugsweise Verschweißen, mit dem Wandungsteil 38 des Lufteintritt-Gehäuseelements 28 verbunden sein.

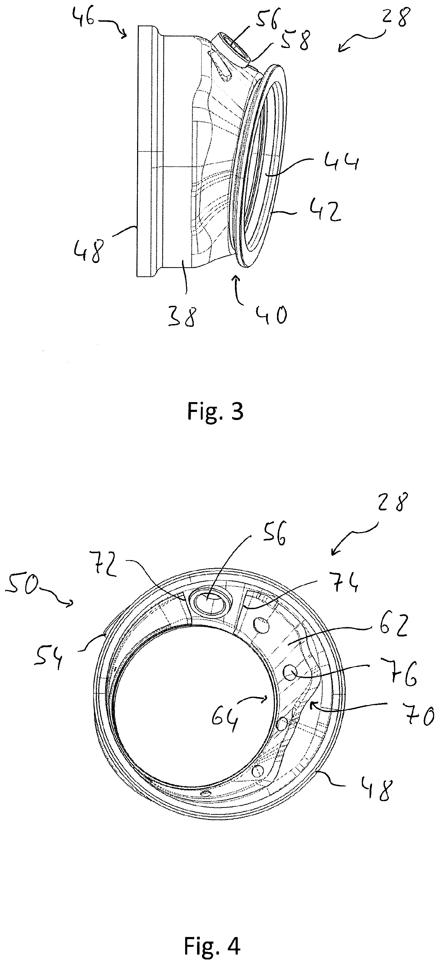

In Fig. 4 ist zu erkennen, dass die Innenwandung 62 im Bereich der Sensoröffnung 56 unterbrochen ist. Dies bedeutet, dass die Sensoröffnung 56 nicht von der Innenwandung 62 überdeckt ist, so dass ein in dieser angeordneter bzw. in diese eingreifender Sensor in unmittelbarer Wechselwirkung mit dem in das Lufteintritt-Gehäuseelement 28 eintretenden Abgas treten kann. Auch im Bereich von beidseits der Lufteintrittsöffnung 56 liegenden und im Wesentlichen in Richtung der Gehäuselängsachse L ausgedehnten Randbereichen 72, 74 kann die Innenwandung an der Innenseite des Wandungsteil 38 anliegen bzw. damit durch Materialschluss verbunden sein.

Die Fig. 4 zeigt, dass in der Innenwandung 62 eine Mehrzahl von in Umfangsrichtung um die Gehäuselängsachse L aufeinander folgend angeordneten Luftdurchtrittsöffnungen 76 vorgesehen ist. Deren Öffnungsgröße, beispielsweise Durchmesser bzw. Querschnittsfläche, nimmt vorzugsweise in Umfangsrichtung in Richtung vom Lufteintritt-Umfangsbereich 50 weg zu. Dies bedeutet, dass die im Bereich des oder am nächsten zum Lufteintritt-Umfangsbereich 50 positionierte Lufteintrittsöffnung 76 die geringste Öffnungsgröße, beispielsweise die geringste Öffnungsquerschnittsfläche, aufweist, während die in Umfangsrichtung am weitesten von dem Lufteintritt-Umfangsbereich 50 entfernt liegende Luftdurchtrittsöffnung 76 die größte Abmessung aufweist.

In demjenigen Bereich, in welchem die Innenwandung 62 den Lufteintritt-Umfangsbereich 50 bzw. die dort gebildete Lufteintrittsöffnung 52 überdeckt, ist in der Innenwandung 62 vorzugsweise keine Luftdurchtrittsöffnung 76 ausgebildet. Dies hat zur Folge, dass über die Lufteintrittsöffnung 52 in eine zwischen der Gehäusewandung 60 und der Innenwandung 62 begrenzte Lufteintrittskammer 78 eintretende Luft nicht direkt bzw. geradlinig und ohne Umlenkung durch eine Luftdurchtrittsöffnung 76 hindurchströmen kann, sondern zunächst an der Innenwandung 62 in Umfangsrichtung abgelenkt wird und zu den in Umfangsrichtung dann folgenden Luftdurchtrittsöffnungen 76 mit beispielsweise in Umfangsrichtung zunehmendem Öffnungsquerschnitt geleitet wird. Dies sorgt dafür, dass über den Umfang verteilt ein näherungsweise gleichförmiger Austritt der in die Lufteintrittskammer 78 eingeleiteten Luft in das Innere des Lufteintritt-Gehäuseelements 28 gewährleistet werden kann.

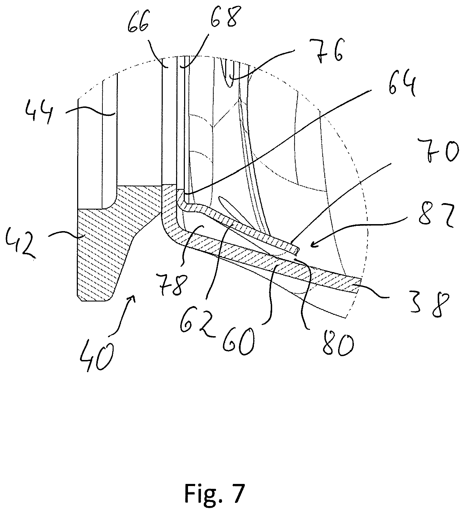

Bei einer in Fig. 7 dargestellten alternativen Ausgestaltungsart kann alternativ oder zusätzlich zu der Einleitung von Luft in das Lufteintritt-Gehäuseelement 28 über die Luftdurchtrittsöffnungen 76 zwischen dem stromabwärtigen Endbereich 70 der Innenwandung 62 und der Gehäusewandung 60, also dem Wandungsteil 38 des Lufteintritt-Gehäuseelements 28, ein eine oder mehrere Lufteintrittsöffnungen 80 bereitstellender spaltartiger Zwischenraum 82 gebildet sein. Dieser kann in Umfangsrichtung um die Gehäuselängsachse L beispielsweise unterbrechungsfrei umlaufend ausgebildet sein oder kann zum Bereitstellen mehrerer derartiger in Umfangsrichtung langgestreckter Lufteintrittsöffnungen 80 dort unterbrochen sein, wo die Umfangswandung 62 nach radial außen gegen die Gehäusewandung 60 vorgespannt ist oder/und durch Materialschluss an diese angebunden ist.

Durch das Bereitstellen der Lufteintrittskammer 78 und der Luftdurchtrittsöffnungen 76 bzw. 80 wird die in den Innenraum des Lufteintritt-Gehäuseelements 28 eingeleitete Luft über den Umfang gleichmäßig verteilt. Diese Luft kann dann im Wesentlichen über den Umfang- bzw. den Querschnitt der Abgasheizanordnung 32 verteilt auf diese zu geleitet werden und somit im Wesentlichen alle beispielsweise durch elektrische Erregung erwärmbaren Oberflächenbereiche derselben Anströmen. Dabei nimmt die die Abgasheizanordnung 32 umströmende Luft Wärme auf und überträgt diese bzw. zumindest einen Teil davon auf die stromabwärts dann folgende Abgasbehandlungseinheit 34. Diese kann somit bereits in einer Phase vor dem Beginn des Arbeitsbetriebs einer Brennkraftmaschine oder in eine Phase, in welcher von einer derartigen Brennkraftmaschine am Beginn des Arbeitsbetriebs nur vergleichsweise wenig bzw. vergleichsweise kaltes Abgas ausgestoßen wird, durch den erwärmten Luftstrom erwärmt und somit schneller auf die für die Durchführung der im Allgemeinen katalytisch ablaufenden Abgasbehandlungsreaktion erforderliche Betriebstemperatur gebracht werden. Durch die Verteilung des Luftstroms stromaufwärts bezüglich der Abgasheizanordnung 32 wird gewährleistet, dass diese im Wesentlichen in allen durch elektrische Erregung auf eine vergleichsweise hohe Temperatur gebrachten Bereichen mit Luft umströmt wird, so dass lokale Überhitzungen vermieden werden und die an der Abgasheizanordnung 32 bereitgestellte Wärme effizient genutzt werden kann, um die stromabwärts dann folgende Abgasbehandlungseinheit 34 oder ggf. mehrere Abgasbehandlungseinheiten 34 thermisch zu konditionieren.

Es ist abschließend darauf hinzuweisen, dass das Abgasführungsgehäuse insbesondere in seinem Lufteintritt-Gehäuseteil im Kontext der vorliegenden Erfindung auch variiert werden kann. So können beispielsweise über den Umfang verteilt mehrere Lufteintritt-Umfangsbereiche vorgesehen sein, um die in das Abgasführungsgehäuse einzuleitende Luft an mehreren Umfangsbereichen aufnehmen zu können. In dem bzw. in mehreren derartigen Lufteintritt-Umfangsbereichen können beispielsweise auch mehrere Lufteintrittsöffnungen vorgesehen sein. Diese können beispielsweise in Umfangsrichtung unmittelbar nebeneinander liegend angeordnet sein oder können in Richtung der Gehäuselängsachse aufeinander folgend angeordnet sein. In Zuordnung zu jeder derartigen Lufteintrittsöffnung kann beispielsweise ein Lufteintrittsstutzen zum Anschluss einer Luftleitung vorgesehen sein. Auch können in einem derartigen Lufteintrittsstutzen mehrere Lufteintrittsöffnungen ausgebildet sein.

## Patentansprüche

1. Abgasführungsgehäuse für eine Abgasanlage einer Brennkraftmaschine, umfassend einen von Abgas in einer Abgas-Hauptströmungsrichtung (H) durchströmbaren Lufteintritt-Gehäuseteil (22) mit einer eine Gehäuselängsachse (L) umgebenden Gehäusewandung (60), wobei in wenigstens einem Lufteintritt-Umfangsbereich (50) der Gehäusewandung (60) wenigstens eine Lufteintrittsöffnung (52) vorgesehen ist, wobei an einer Innenseite des Lufteintritt-Gehäuseteils (22) eine zusammen mit der Gehäusewandung (60) eine Lufteintrittskammer (78) umgrenzende Innenwandung (62) vorgesehen ist und die wenigstens eine Lufteintrittsöffnung (52) zu der Lufteintrittskammer (78) offen ist, wobei in der Innenwandung (62)eine Mehrzahl von in Umfangsrichtung um die Gehäuselängsachse (L) aufeinander folgenden Luftdurchtrittsöffnungen (76) vorgesehen ist, **dadurch gekennzeichnet, dass** eine Öffnungsgröße der Luftdurchtrittsöffnungen (76) in Umfangsrichtung ausgehend von dem wenigstens einen Lufteintritt-Umfangsbereich (50) zunimmt.

2. Abgasführungsgehäuse nach Anspruch 1, **dadurch gekennzeichnet, dass** die Innenwandung (62) wenigstens in einem stromaufwärtigen axialen Endbereich (64) bezüglich der Gehäusewandung (60) festgelegt ist, oder/und dass die Innenwandung (62) wenigstens in einem stromabwärtigen axialen Endbereich (70) unter radialer Vorspannung an einer Innenseite der Gehäusewandung (60) abgestützt ist.

3. Abgasführungsgehäuse nach Anspruch 2, **dadurch gekennzeichnet, dass** die Innenwandung (62) in ihrem stromaufwärtigen axialen Endbereich (64) bezüglich der Gehäusewandung (60) durch Materialschluss, vorzugsweise Verschweißen, festgelegt ist.

4. Abgasführungsgehäuse nach einem der Ansprüche 1-3, **dadurch gekennzeichnet, dass** zwischen der Innenwandung (62) und der Gehäusewandung (60) wenigstens eine Luftdurchtrittsöffnung (80) gebildet ist.

5. Abgasführungsgehäuse nach Anspruch 4, **dadurch gekennzeichnet, dass** wenigstens zwischen einem stromabwärtigen axialen Endbereich (70) der Innenwandung (62) und der Gehäusewandung (60) wenigstens eine Luftdurchtrittsöffnung (80) gebildet ist.

6. Abgasführungsgehäuse nach Anspruch 5, **dadurch gekennzeichnet, dass** die wenigstens eine zwischen dem stromabwärtigen Endbereich (70) der Innenwandung (62) und der Gehäusewandung (60) gebildete Luftdurchtrittsöffnung (80) sich in Umfangsrichtung wenigstens entlang eines Teils des stromabwärtigen Endbereichs (70) der Innenwandung (62) erstreckt.

7. Abgasführungsgehäuse nach einem der Ansprüche 1-6, **dadurch gekennzeichnet, dass** in einem die wenigstens eine Lufteintrittsöffnung (52) überdeckenden Bereich der Innenwandung (62) keine Luftdurchtrittsöffnung ausgebildet ist.

8. Abgasführungsgehäuse nach einem der Ansprüche 1-7, **dadurch gekennzeichnet, dass** in dem Lufteintritt-Gehäuseteil (22) wenigstens eine nicht von der Innenwandung (62) überdeckte Sensoröffnung (56) vorgesehen ist.

9. Abgasführungsgehäuse nach einem der Ansprüche 1-8, **dadurch gekennzeichnet, dass** der Lufteintritt-Gehäuseteil (22) ein in der Abgas-Hauptströmungsrichtung (H) sich radial erweiterndes Lufteintritt-Gehäuseelement (28) umfasst, wobei das Lufteintritt-Gehäuseelement (28) in einem stromaufwärtigen Endbereich (40) eine Abgaseintrittsöffnung (44) aufweist und zur Anbindung an eine Abgasführungskomponente (16) einer Abgasanlage (10) ausgebildet ist und in einem stromabwärtigen Endbereich (46) mit einer vorzugsweise im Wesentlichen zylindrischen Gehäuseumfangswandung (30) verbunden ist.

10. Abgasanlage für eine Brennkraftmaschine, umfassend ein Abgasführungsgehäuse (12) nach einem der vorangehenden Ansprüche.

11. Abgasanlage nach Anspruch 10, **dadurch gekennzeichnet, dass** in dem Abgasführungsgehäuse (12) stromabwärts bezüglich des Lufteintritt-Gehäuseteils (22) eine Abgasheizanordnung (32) und stromabwärts bezüglich der Abgasheizanordnung (32) wenigstens eine Abgasbehandlungseinheit (34), vorzugsweise Katalysator oder/und Partikelfilter, angeordnet sind.

## Claims

1. An exhaust-gas guiding housing for an exhaust-gas system of an internal combustion engine, comprising an air inlet housing part (22) through which exhaust gas can flow in an exhaust-gas main flow direction (H) and which has a housing wall (60) which surrounds a housing longitudinal axis (L), wherein at least one air inlet opening (52) is provided in at least one air inlet peripheral region (50) of the housing wall (60), wherein an inner wall (62) is provided at an inner side of the air inlet housing part (22), which inner wall (62), together with the housing wall (60), borders an air inlet chamber (78), and the at least one air inlet opening (52) being open to the air inlet chamber (78), wherein a plurality of air passage openings (76) which are successive in a peripheral direction about the housing longitudinal axis (L) is provided in the inner wall (62), **characterized in that** an opening size of the air passage openings (76) increases in a peripheral direction proceeding from the at least one air inlet peripheral region (50).

2. The exhaust-gas guiding housing as claimed in claim 1, **characterized in that** the inner wall (62), at least in an upstream axial end region (64), is fixed with respect to the housing wall (60), and/or **in that** the inner wall (62), at least in a downstream axial end region (70), is supported under radial preload against an inner side of the housing wall (60).

3. The exhaust-gas guiding housing as claimed in claim 2, **characterized in that** the inner wall (62), in its upstream axial end region (64), is fixed with respect to the housing wall (60) by material cohesion, preferably welding.

4. The exhaust-gas guiding housing as claimed in any one of claims 1-3, **characterized in that** at least one air passage opening (80) is formed between the inner wall (62) and the housing wall (60).

5. The exhaust-gas guiding housing as claimed in claim 4, **characterized in that** at least one air passage opening (80) is formed at least between a downstream axial end region (70) of the inner wall (62) and the housing wall (60).

6. The exhaust-gas guiding housing as claimed in claim 5, **characterized in that** the at least one air passage opening (80) formed between the downstream end region (70) of the inner wall (62) and the housing wall (60) extends in a peripheral direction at least along a part of the downstream end region (70) of the inner wall (62).

7. The exhaust-gas guiding housing as claimed in any one of claims 1-6, **characterized in that** no air passage opening is formed in a region of the inner wall (62) which overlaps the at least one air inlet opening (52).

8. The exhaust-gas guiding housing as claimed in any one of claims 1-7, **characterized in that** at least one sensor opening (56), which is not overlapped by the inner wall (62), is provided in the air inlet housing part (22).

9. The exhaust-gas guiding housing as claimed in any one of claims 1-8, **characterized in that** the air inlet housing part (22) comprises an air inlet housing element (28) which widens radially in the exhaust-gas main flow direction (H), wherein the air inlet housing element (28), in an upstream end region (40), has an exhaust-gas inlet opening (44) and is designed for attachment to an exhaust-gas guiding component (16) of an exhaust-gas system (10), and in a downstream end region (46), is connected to a preferably substantially cylindrical housing peripheral wall (30).

10. An exhaust-gas system for an internal combustion engine, comprising an exhaust-gas guiding housing (12) as claimed in any one of the preceding claims.

11. The exhaust-gas system as claimed in claim 10, **characterized in that**, in the exhaust-gas guiding housing (12), uan exhaust-gas heating arrangement (32) is arranged downstream of the air inlet housing part (22), and at least one exhaust-gas treatment unit (34), preferably catalytic converter and/or particle filter, is arranged downstream of the exhaust-gas heating arrangement (32).

## Revendications

1. Un boîtier de guidage des gaz d'échappement pour un système de gaz d'échappement d'un moteur à combustion intérieur, comprenant une partie de boîtier d'entrée d'air (22) à travers laquelle les gaz d'échappement peuvent s'écouler dans une direction principale d'écoulement des gaz d'échappement (H) et qui a une paroi de boîtier (60) qui entoure un axe longitudinal de boîtier (L), dans lequel au moins une ouverture d'entrée d'air (52) est prévue dans au moins une région périphérique d'entrée d'air (50) de la paroi de boîtier (60), dans lequel une paroi intérieure (62) est prévue sur un côté intérieur de la partie de boîtier d'entrée d'air (22), dans lequel cette paroi intérieure (62), avec la paroi de boîtier (60), délimite une chambre d'entrée d'air (78), et ledit au moins une ouverture d'entrée d'air (52) est ouverte sur la chambre d'entrée d'air (78), dans lequel une pluralité d'ouvertures de passage d'air (76) qui se succèdent dans une direction périphérique autour de l'axe longitudinal de boîtier (L) est prévue dans la paroi intérieure (62), **caractérisée en ce qu'**une taille d'ouverture des ouvertures de passage d'air (76) augmente dans une direction périphérique à partir dudit au moins une région périphérique d'entrée d'air (50).

2. Boîtier de guidage des gaz d'échappement selon la revendication 1, **caractérisé en ce que** la paroi intérieure (62), au moins dans une région d'extrémité axiale amont (64), est fixe par rapport à la paroi de boîtier (60), et/ou **en ce que** la paroi intérieure (62), au moins dans une région d'extrémité axiale aval (70), est supportée par une précontrainte radiale contre un côté intérieur de la paroi de boîtier (60).

3. Boîtier de guidage des gaz d'échappement selon la revendication 2, **caractérisé en ce que** la paroi intérieure (62), dans sa région d'extrémité axiale amont (64), est fixée par rapport à la paroi de boîtier (60) par cohésion de matériau, de préférence par soudage.

4. Boîtier de guidage des gaz d'échappement selon l'une quelconque des revendications 1 à 3, **caractérisé en ce qu'**au moins une ouverture de passage d'air (80) est formée entre la paroi intérieure (62) et la paroi de boîtier (60).

5. Boîtier de guidage des gaz d'échappement selon la revendication 4, **caractérisé en ce qu'**au moins une ouverture de passage d'air (80) est formée au moins entre une région d'extrémité axiale aval (70) de la paroi intérieure (62) et la paroi de boîtier (60).

6. Boîtier de guidage des gaz d'échappement selon la revendication 5, **caractérisé en ce que** ledit au moins une ouverture de passage d'air (80) formée entre la région d'extrémité aval (70) de la paroi intérieure (62) et la paroi de boîtier (60) s'étend dans une direction périphérique au moins le long d'une partie de la région d'extrémité aval (70) de la paroi intérieure (62).

7. Boîtier de guidage des gaz d'échappement selon l'une quelconque des revendications 1 à 6, **caractérisé en ce qu'**aucune ouverture de passage d'air n'est formée dans une région de la paroi intérieure (62) qui chevauche ledit au moins une ouverture d'entrée d'air (52).

8. Le boîtier de guidage des gaz d'échappement selon l'une quelconque des revendications 1 à 7, **caractérisé en ce qu'**au moins une ouverture de capteur (56), qui n'est pas recouverte par la paroi intérieure (62), est prévue dans la partie du boîtier d'entrée d'air (22).

9. Boîtier de guidage des gaz d'échappement selon l'une quelconque des revendications 1 à 8, **caractérisé en ce que** la partie de boîtier d'entrée d'air (22) comprend un élément de boîtier d'entrée d'air (28) qui s'élargit radialement dans la direction d'écoulement principal des gaz d'échappement (H), dans lequel l'élément de boîtier d'entrée d'air (28), dans une région d'extrémité amont (40), comprend une ouverture d'entrée des gaz d'échappement (44) et est conçu pour être fixé à un élément de guidage des gaz d'échappement (16) d'un système de gaz d'échappement (10), et dans une région d'extrémité aval (46), est relié à une paroi périphérique de boîtier (30), de préférence essentiellement cylindrique.

10. Système de gaz d'échappement pour un moteur à combustion intérieur, comprenant un boîtier de guidage des gaz d'échappement (12) selon l'une quelconque des revendications précédentes.

11. Système de gaz d'échappement selon la revendication 10, **caractérisé en ce que**, dans le boîtier de guidage des gaz d'échappement (12), un dispositif de chauffage des gaz d'échappement (32) est disposé en aval de la partie du boîtier d'entrée d'air (22), et **en ce qu'**au moins une unité de traitement des gaz d'échappement (34), de préférence un convertisseur catalytique et/ou un filtre à particules, est disposée en aval du dispositif de chauffage des gaz d'échappement (32).
